# EUROPEAN PATENT SPECIFICATION

(11) **EP 1 319 962 B1**
(45) Date of publication and mention of the grant of the patent: **24.01.2007**
(21) Application number: 02019805.7
(22) Date of filing: 05.09.2002
(51) Int. Cl.: G01S 15/93, G08G 1/00, G08G 1/16, B60Q 1/00, B62D 15/02, B60Q 1/48, B60K 31/00

(54) **Safety device for vehicles using multi-channel audio system**
Sicherheitsvorrichtung für Fahrzeuge mit einem Mehrkanal-Audio-System
Dispositif de sécurité pour véhicules utilisant un système audio multi-canaux

(30) Priority: 11.12.2001 KR 2001078229
(43) Date of publication of application: 18.06.2003
(73) Proprietor: KIA MOTORS CORPORATION, Seoul 137-938 (KR)
(72) Inventor: Yun, Seoung Kook, Gyunggi-do 425-843 (KR)
(74) Representative: Reinhard - Skuhra - Weise & Partner

(56) References cited:
- DE-A- 19 652 930
- US-A- 4 528 563
- US-A- 5 091 726

## Description

The present invention relates to a safety device for a vehicle in accordance with the preamble of claim 1 as known from US 4,528,563.

DE 196 52 930 A1 discloses a distance warn device comprising a plurality of speakers which emits simultaneously such that the driver hears a warn signal in direction to an obstacle.

US 5,091,726 discloses a device for preventing a car collision including distant sensors and a speed sensor by providing warning and control signals.

### BACKGROUND OF THE INVENTION

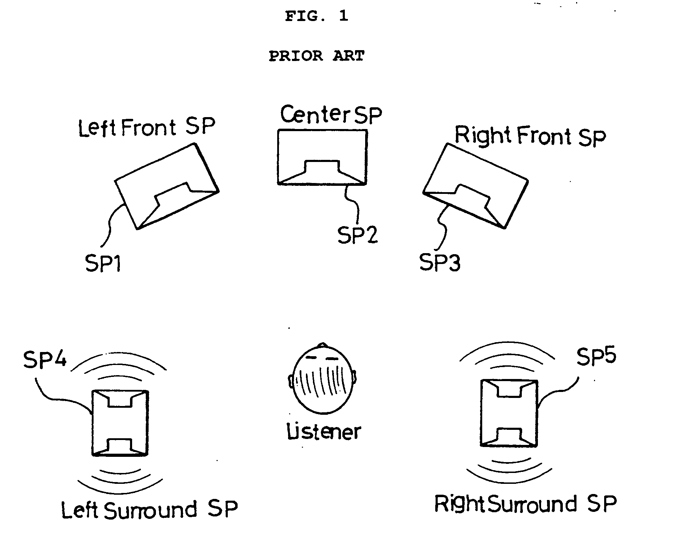

Multiple channel audio systems, as in theaters, are now commonly installed in homes or in demonstration rooms of companies. In the case of the typical household audio system, it has at least five speakers as shown in Fig. 1. For example, three speakers are disposed in front of a listener and the other two speakers are disposed behind the listener. Each of the speakers operates independently and an amplifier synthesizes the movement of sounds from all speakers. Due to the five speakers surrounding the listener, the listener feels as if he were in a movie or music theater.

Such home theater systems have influenced audio systems for automobiles, and thus car audio systems tend to adopt the multi-channel system. Many car audio system products also have liquid crystal display(LCD) devices and five-channel systems. There have been no conventional automobiles, however, which have safety devices adopting the multi-channel audio systems.

### SUMMARY OF THE INVENTION

The invention provides a safety device for a vehicle in accordance with claim 1.

Therefore, according to the present invention, by using the multi-channel audio system that has already been mounted in the vehicle, a driver of a vehicle can exactly recognize the presence of dangerous obstacles and the location thereof visually and aurally while driving, and thus safety may be improved.

According to the invention, the controller generates signals such that sounds are emitted from the speakers positionally corresponding to the obstacle location. In addition, a plurality of A/D converters may be disposed between each sensor and the controller.

Moreover the speakers form a part of a multi-channel audio system. The system additionally comprises an audio circuit disposed between the speakers and said controller to generate sound signals for the speakers. The multi-channel audio system further comprises a display driven by the audio circuit. In this case, the controller generates signals for displaying a visual indicator of the obstacle location on the display.

### BRIEF DESCRIPTION OF THE DRAWINGS

The accompanying drawings, which are included to provide a further understanding of the invention and are incorporated in and constitute a part of this specification, illustrate an embodiment of the invention and together with the description serve to explain the principles of the invention, wherein:
FIG. 1 is a schematic view showing a conventional home theater system;
FIG. 2 is a schematic view showing a safety device according to the present invention as installed in a vehicle;
FIG. 3 is a block diagram of a safety device for a vehicle according to the present invention;

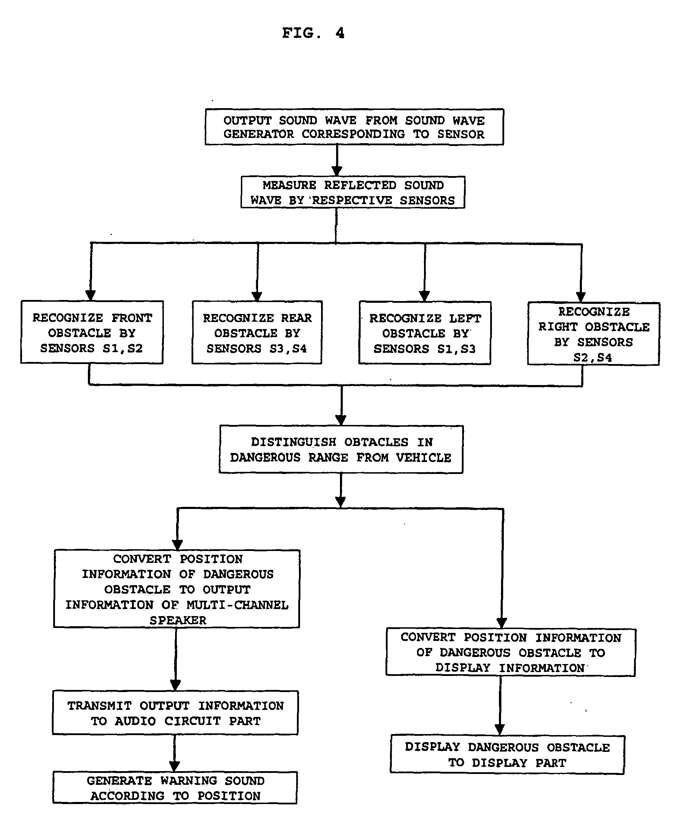

FIG. 4 is a flow chart of the operation of the safety device according to the present invention; and
FIGs. 5a and 5b are views showing the operation of sound wave sensors according to the present invention.

### DETAILED DESCRIPTION OF THE PREFERRED EMBODIMENTS

Reference will now be made in detail to preferred embodiments of the present invention in conjunction with accompanying drawings.

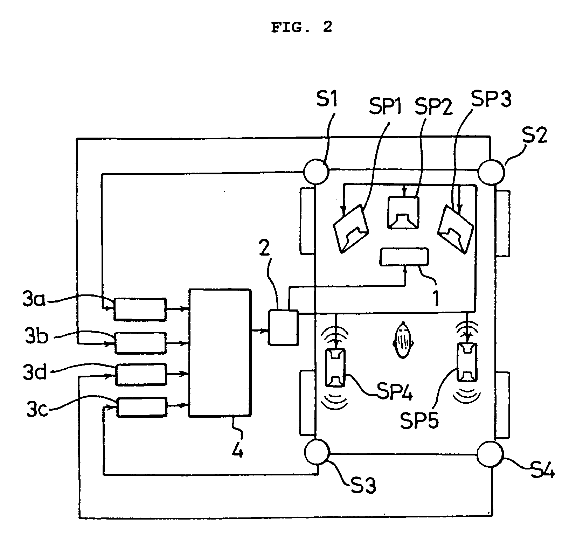

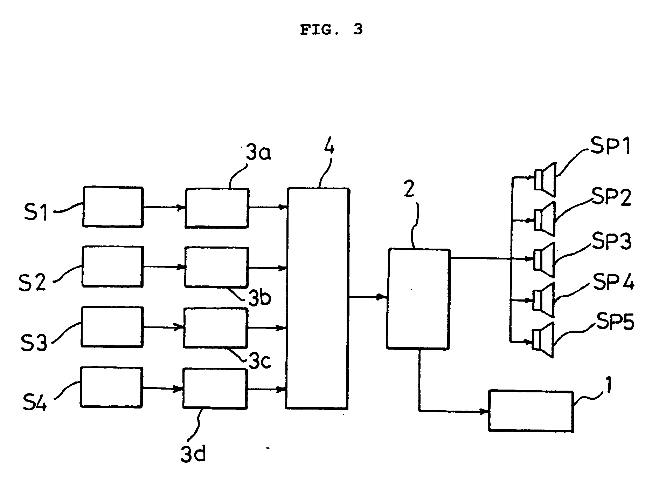

Referring first to FIGs. 2 and 3, a safety device for a vehicle using a multi-channel audio system according to a preferred embodiment of the present invention comprises a plurality of speakers SP1 to SP5, a display unit 1 and an audio circuit 2. A plurality of sound wave sensors S1 to S4 are preferably mounted on front and rear parts and left and right sides of the vehicle, each of which includes a sound wave generator for generating sound waves towards objects and a receiver for receiving sound waves reflected from the objects. A plurality of A/D converters 3a to 3n convert analog signals of the reflected sound waves, which are output from the sound wave sensors S1-S4, to digital signals.

Control means 4 includes a processor, memory and other appropriate hardware and software as may be selected by a person of ordinary skill in the art to execute control functions as described herein. For example, control means 4 is programmed to monitor the digital signals from the A/D converters 3a-3n to recognize the existence of an obstacle and its location within a danger area around the vehicle. If an obstacle is in the danger area, control means 4 outputs a signal representative of the location of the obstacle such that warning sounds, which differ depending on the location of the obstacle, are generated by the speakers SP1-SP5 via the audio circuit 2. Control means 4 also converts information on the location of the obstacle to display information such that the location of the obstacle is displayed on the display unit 1 via the audio circuit 2.

Now, the operation and effect of the safety device for an automobile according to the present invention will be described in more detail.

The safety device of the present invention uses the multi-channel audio system, which has already been mounted in the vehicle, and adopts the sound wave sensors S1-S4 to warn the driver of danger due to external obstacles or other vehicles while driving. The sound wave generators with sensors S1-S4 generate sound waves of predetermined frequencies and the receivers receive sound waves of all frequency ranges. The frequencies of the sound waves emitted from the sound wave sensors S1-S4 are independent to be distinguishable from one another. These four sound wave sensors S1-S4 form coordinates to detect the existence and the location of an obstacle in the front and rear parts and the right and left sides of the vehicle. If more than four sound wave sensors are installed in the vehicle, the detection of an obstacle may be done with more accuracy.

In addition, although optical sensors can detect the existence of obstacles, they cannot actually measure the distance between the obstacle and the vehicle since the distance is too close. Therefore, the detection of obstacles can preferably be carried out by the sound wave sensors, and in this regard, speed guns of the traffic police may be used as the sound wave sensors in the present invention.

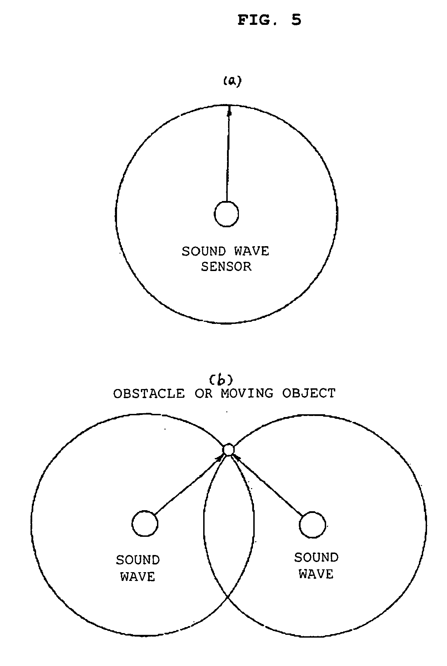

As in FIG. 5a, one sound wave sensor of the four sound wave sensors S1-S4 detects a distance between the sensor and the obstacle. FIG. 5b shows the recognition of the location of the obstacle by using two sensors of the four sound wave sensors S1-S4, wherein the opposite intersection point of the sound waves may be ignored since it is not measurable due to the structure of the vehicle.

The reflected sound waves from the objects, which are received by the sound wave sensors S1-S4, are analog signals which cannot be directly recognized by the control means 4. Accordingly, the analog signals are converted into digital signals by a plurality of A/D converters 3a-3n.

The control means 4 measures the digital signals input from the A/D converters 3a-3n to recognize the existence of an obstacle and its location within danger areas at the front and rear parts and the right and left sides of the vehicle. If the obstacle is recognized as being in the danger area, control means 4 changes the information on location of the obstacle to a multi-channel speaker output information. Warning sounds, which differ depending on the location of the obstacle, are generated by the speakers SP1-SP5 via the audio circuit 2. Simultaneously with generating the warning sounds, the control means 4 converts the information on the location of the obstacle to display information, and displays the location of the obstacle on the display unit 1 via the audio circuit 2.

The control means 4 analyzes the reflectivity of the sound waves emitted from the respective positions and the time difference thereof to form the coordinates on a plane. Then, the information on the location of the obstacle identified by the coordinates is converted into output information for the multi-channel speakers and the display information to be respectively output by the speakers SP1-SP5 and the display unit 1 via the audio circuit 2. For example, if the existence of another vehicle or an obstacle is detected in the vicinity of the left rear part of the automobile, the speaker mounted on the left rear part mainly generates a sound signal, and the left front speaker generates a weak warning sound signal. Simultaneously, a message that the obstacle appears in the left rear part is displayed on the display unit 1. Thus, the driver can recognize the existence and the location of the obstacle visually and aurally.

Further, according to the safety device of the present invention, as the driver can be informed and warned either by the warning sound or the display information, it becomes possible for the driver to precisely recognize an obstacle and its position only by the warning sound generated by the five speakers SP1-SP5 even though the driver cannot see the obstacle. Thus, a driver may aurally and visually recognize the precise positions of obstacles or other vehicles in dangerous areas by the warning sound and/or by warning characters or graphics, using a multi-channel audio system and sound wave sensors.

## Claims

1. A safety device for a vehicle, comprising:
a multi-channel audio system including a plurality of speakers (SP1-SP5), a display unit (1) and an audio circuit (2);
a plurality of sound wave sensors (S1-S4) mounted on front and rear parts and left and right sides of the vehicle, each of which includes a sound wave generator for generating sound waves directed towards objects and a receiver for receiving sound waves reflected from the objects, said objects being located around the vehicle;
a plurality of A/D converters for converting analogue signals of the reflected sound waves which are output from the sound wave sensors (S1-S4) to digital signals; and
control means (4) receiving the digital signals from the A/D converters to determine the presence of an obstacle and its location within a danger area around the vehicle, said control means providing output signals indicative of such obstacles and their location to the multi-channel audio system to generate warning sounds which differ depending on the location of the obstacle and to display information regarding the location of the obstacle on the display unit (1),
**characterized in that**
said sound wave generators are arranged for emitting sound waves with different independent predetermined frequencies being distinguishable from one another for determining said location of the obstacle by said control means (4), and said receivers are arranged for receiving reflected sound waves of all frequencies.

## Patentansprüche

1. Eine Sicherheitsvorrichtung für ein Fahrzeug, mit:
einem Mehrkanal-Audiosystem, das eine Mehrzahl von Lautsprechern (SP1 bis SP5), eine Anzeigeneinrichtung (1) und eine Audioschaltung (2) beinhaltet;
einer Mehrzahl von Sensoren für Schallwellen (S 1 bis S4), die an Vorder- und Rückteilen und der linken und der rechten Seite des Fahrzeugs angeordnet sind, wobei jeder einen Schallwellengenerator zum Generieren von Schallwellen, die auf Objekte gerichtet sind, und einen Empfänger zum Empfangen von Schallwellen, die von dem Objekt reflektiert werden beinhaltet, wobei die Objekte um das Fahrzeug angeordnet sind;
einer Mehrzahl von A/D-Wandlern zum Wandeln von analogen Signalen der reflektierten Schallwellen, die von den Sensoren (S1 bis S4) für Schallwellen ausgegeben werden, in digitale Signale; und
einer Steuereinrichtung (4) zum Empfangen der digitalen Signale von den A/D-Wandlern zum Bestimmen des Vorliegens eines Hindernisses und seines Ortes innerhalb eines Gefährdungsbereiches um das Fahrzeug, wobei die Steuereinrichtung Ausgangssignale bereitstellt, die solche Hindernisse und ihren Ort dem Mehrkanal-Audiosystem angeben, zum Generieren von Warntönen, die in Abhängigkeit des Ortes des Hindernisses sich unterscheiden, und zum Anzeigen von Information bezüglich des Ortes des Hindernisses auf der Anzeigeneinrichtung (1),
**dadurch gekennzeichnet, dass**
die Schallwellengeneratoren zum Ausgeben von Schallwellen mit unterschiedlichen unabhängig vorbestimmten Frequenzen angeordnet sind, die zum Bestimmen des Ortes des Hindernisses durch die Steuereinrichtung (4) voneinander unterscheidbar sind, und die Empfänger zum Empfangen reflektierter Schallwellen aller Frequenzen eingerichtet sind.

## Revendications

1. Dispositif de sécurité pour un véhicule, comprenant :
un système audio multicanal comprenant une pluralité de haut-parleurs (SP1 à SP5), une unité d'affichage (1) et un circuit audio (2) ;
une pluralité de capteurs d'ondes acoustiques (S1 à S4) montés sur les parties avant et arrière et les côtés gauche et droit du véhicule, dont chacun comprend un générateur d'ondes acoustiques destiné à générer des ondes acoustiques dirigées vers des objets et un récepteur destiné à recevoir des ondes acoustiques réfléchies par les objets, lesdits objets étant situés autour du véhicule ;
une pluralité de convertisseurs analogiques-numériques destinés à convertir des signaux analogiques des ondes acoustiques réfléchies qui sont sorties des capteurs d'ondes acoustiques (S1 à S4) en signaux numériques ; et,
des moyens de commande (4) recevant les signaux numériques en provenance des convertisseurs analogiques-numériques afin de déterminer la présence d'un obstacle et sa position dans une zone de danger autour du véhicule, lesdits moyens de commande fournissant des signaux de sortie indiquant de tels obstacles ainsi que leur position au système audio multicanal afin de générer des sons d'avertissement qui diffèrent en fonction de la position de l'obstacle et d'afficher des informations concernant la position de l'obstacle sur l'unité d'affichage (1),
**caractérisé en ce que**
lesdits générateurs d'ondes acoustiques sont agencés pour émettre des ondes acoustiques de fréquences prédéterminées indépendantes différentes pouvant être distinguées les unes des autres afin de permettre auxdits moyens de commande (4) de déterminer ladite position de l'obstacle, et lesdits récepteurs sont agencés pour recevoir des ondes acoustiques réfléchies de toutes fréquences.
